# EUROPEAN PATENT APPLICATION

(11) **EP 1 518 897 A2**
(43) Date of publication of application: **30.03.2005**
(21) Application number: 04255109.3
(22) Date of filing: 25.08.2004
(51) Int. Cl.: C08L 23/10, C08L 67/00, B32B 27/32, B32B 27/36

(54) **Pucker resistant film and package**

(30) Priority: 29.09.2003 US 674950
(71) Applicant: Frito-Lay North America, Inc., Plano, TX 75024-4099 (US)
(72) Inventor: Knoerzer, Anthony Robert, Plano Texas 75025 (US); Kohl, Garrett William, Allen Collin County Texas 75013 (US)
(74) Representative: Jenkins, Peter David

(57) **Abstract**

A flexible food package with a wall comprised of thin film layers, at least one of which has a reduced permeability characteristic that reduces absorption by the package wall of oils associated with the food product in the package. The reduced permeability characteristic is achieved by decreasing the amount of amorphousness in the polymers forming the thin film layer. Reducing the amount of oil absorbed by the package wall reduces the amount of swelling, puckering, and disfigurement of the package.

## Description

The present invention relates to an improved flexible package with walls made up of multi-layer thin films. In particular, the package comprises a wall with a permeability characteristic that reduces absorption of substances associated with a packaged food product, and thereby prevents swelling and disfiguration of the package wall.

Packages made up of multi-layer flexible thin films are commonly used as food containers. The materials used to construct such films are generally chosen for their barrier properties, which act to prevent shelf life-reducing agents, such as oxygen, moisture, and light, from entering the bag. Different materials have different resistances to penetration of oxygen and moisture, so such variations are factors considered when the combination of films that make up a package is selected. It is also generally true that the cost of flexible films, and the containers they form, increases as the films' barrier characteristics improve. So, from a manufacturing perspective, it is desirable to maximize barrier characteristics, while minimizing cost.

As newer materials with improved barrier properties are developed, and package designs are improved to incorporate those developments, the shelf life of the food product in the improved package generally increases. One example of such an improvement is the use of ethyl vinyl alcohol (EVOH) as one of the layers making up a food container. Use of EVOH in food packages makes them more resistant to the penetration of oxygen, which in turn increases the shelf life of the product.

The various film layers incorporated into flexible food packages are often employed for purposes other than to prevent penetration of agents that directly affect product shelf life. For example, a layer may be incorporated to preserve another layer of the package wall. In this regard, ethyl vinyl alcohol (EVOH), an excellent barrier to oxygen, is often used as one of the layers making up a food package. However, its resistance to oxygen penetration is reduced if it is exposed to moisture. Additionally, moisture that could erode the oxygen resistance of EVOH is often present not only on the outside of a package, but, depending on the type of food product, may also be present on the product side of the package wall. Therefore, the package wall must often include barriers to moisture on both the outside and product side of an EVOH layer.

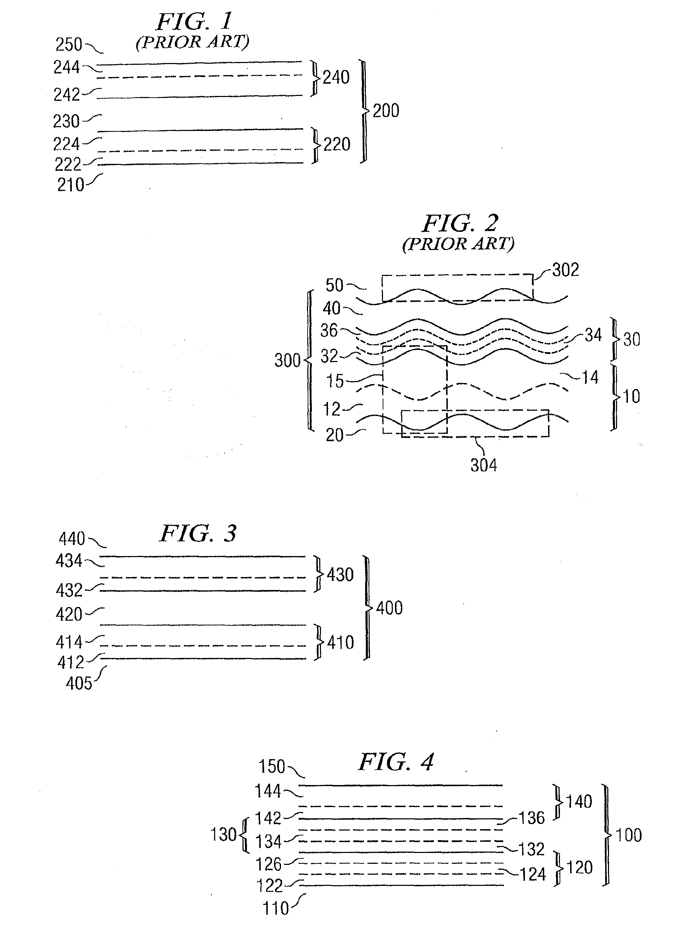

In addition to moisture, any oils and other substances associated with a food product also come in contact with the product side of a package wall. For example, **Figure 1** is a cross-sectional view of an embodiment of the wall of a typical multi-layer prior art food package. The first flexible thin film **220** is on the product side **210** of the package wall **200**, and comprises a sealant film layer **222** and a core film layer **224**. Preferably, the core film layer **224** is a polyolefin film, such as a polypropylene (PP) or polyethylene terephthalate (PET), or metalized PP or metalized PET. The sealant layer **222** typically comprises a ter-polymer blend of polypropylene, polyethylene, and polybutene. The ratio of these polymers on a weight basis is typically 5% polythylene, 2% polybutene, and the remainder polypropylene. The sealant layer **222** is on the product side **210** of the first film **220**. Thus, the sealant layer **222** comes into contact with the food product in the package, which may be chips, candies, or other snacks. Any other substances associated with the food product, such as preservatives, flavoring, moisture, or oils, also come into contact with the sealant layer **222** of the first film **220.**

The second film **230** typically includes an EVOH layer between protective polymer layers. Alternatively, the second film **230** may include weakly bonded polymer layers that prevent tearing of the package upon opening by the consumer. The third film **240** includes a PP or PET film layer **244** that is on the outside **250** of the package, and often includes a printed ink layer **242**, the characteristics of which depend on the application. When a printed ink layer **242** is included, the PP or PET film layer **244** is made transparent so that the ink layer **242** can be viewed.

One unforeseen consequence of improvements in barrier properties and the resultant extensions of product shelf life is excessive absorption by the package wall of substances associated with the packaged product, such as oils or moisture. Such substances come into direct contact with the inner surface of the package wall throughout the useful life of the package. Prior art packages made up of multi-layer thin films designed to possess barrier properties that prolong a product's shelf life did not anticipate absorption of oils from within the package that could become excessive and have destructive consequences. Over time, and especially at elevated temperatures, substances associated with a product that are in direct contact with the inner surface of a prior art package wall are absorbed by the thin films that make up the package wall. As a result, accumulation of the absorbed substances results in swelling of package walls, and blemishing of the package's appearance:

**Figure 2** illustrates a cross-sectional view of the disfigured appearance of a prior art package wall **300** due to absorption of substances, such as oils and/or moisture associated with a food product inside the package. As in **Figure 1**, the first flexible thin film **10** comprises a sealant film layer **12** and core film layer **14**, which may be any of PP, PET, metalized PP or metalized PET film. In applications requiring a prohibitive oxygen barrier, a second flexible thin film **30** typically includes an EVOH layer **34** sandwiched between moisture-blocking polymer layers **32, 36**. A third flexible thin film **40**, also a PP or PET film, is on the outside 50 of the package. Any liquid or semi-solid substances, such as oils and/or moisture, that are associated with a packaged product on the inside **20** of the package wall **300** may be absorbed by the wall **300**. In the case of oils, the oils penetrate the sealant layer **12** and accumulate in the first thin film **10**. Over time, and especially at elevated temperatures, the accumulation in the first thin film **10** causes it to swell. The swelling **15** is manifested in the appearance of the package as the surface **302, 304** of the package wall **300**, on both the inside and outside of the package, develops a slightly uneven look, which may be described as dimpled or puckered. This undesirable disfiguration greatly reduces the shelf appearance, and aesthetic market value, of the package.

Therefore, an improved package design and method are needed that minimize the absorption of product oils in the walls of a package containing food. The improvement should provide optimum shelf appearance for a longer time period. At the same time, the cost associated with the improved package should be minimized and other package characteristics, such as product shelf-life enhancing properties, should be maintained.

The proposed invention comprises a flexible food package formed from multi-layer thin films, where a film layer having a permeability characteristic that reduces absorption of food product substances from within the package is incorporated into the package wall design. The permeability characteristic, also referred to herein as "reduced permeability" and "reduced permeability characteristic," is achieved by inserting resins, preferably one or more polyterpenes, into amorphous regions of the polymer(s) forming the film layer. The inserted resins decrease the amount of amorphousness of the polymer, thereby reducing its permeability to food substances such as oil. A reduction in permeability according to the present invention comprises reducing the amount of oil from a packaged food that is absorbed by the package wall, or slowing the rate at which oil from a packaged food is absorbed by the package wall.

Reducing absorption of food product oils by the package wall, or slowing the rate of absorption of such oils by the package wall, is increasingly necessary as better packaging technologies prolong the shelf life of food products. A longer shelf life lengthens the time the inner wall of the package is exposed to substances associated with the food product that the inner wall is likely to absorb from the food, such as oils and moisture. Through reducing absorption of product-side substances by the package wall over time, and especially at elevated temperatures, the invention prevents disfiguration of the package wall, such as swelling, and disfiguration of the package, such as puckering. The ability to better maintain the appearance of the package provides a significant advantage in a competitive food packaging environment.

The novel features believed characteristic of the invention are set forth in the appended claims. The invention itself, however, as well as the preferred mode of use, and further objectives and advantages thereof, will be best understood when described in conjunction with the following illustrative embodiments wherein:
**Figure 1** is an illustration of a cross-section of the wall of a multi-layer thin film food package of the prior art;
**Figure 2** is an illustration of a cross-section of the wall of a multi-layer thin film food package of the prior art wherein substances from the product side of the package wall have been absorbed by the package wall, resulting in puckering or disfiguration of the wall;
**Figure 3** is a cross-sectional view of an embodiment of a package wall according to the present invention wherein the package wall comprises a film layer with a reduced permeability characteristic; and
**Figure 4** is a cross-sectional view of another embodiment of a package wall according to the present invention wherein the package wall comprises a film layer with a reduced permeability characteristic.

The present invention provides a film layer for use in forming food packages, where the film layer has a permeability characteristic that reduces absorption of oils associated with the packaged food. The permeability characteristic is also referred to herein as "reduced permeability" and "reduced permeability characteristic." A reduction in permeability according to the present invention comprises reducing the amount of oil from a packaged food that is absorbed by the package wall, or slowing the rate at which oil from a packaged food is absorbed by the package wall.

The reduced permeability characteristic is achieved by decreasing the amorphousness of one or more of the film layers forming the package by inserting resins into amorphous regions of the polymer forming the film layer. The properties of polymers are dramatically affected and primarily determined by molecular structure. In general, polymers can be classified as either crystalline (or more accurately, semi-crystalline) or amorphous. The ordered arrangement of molecules results in crystallinity. However, polymers invariably contain some amorphous material, i.e., lacking an ordered structure. Amorphousness is well known in the art as a physical characteristic of common packaging polymers such as polypropylene (PP) and polyethylene terephthalate (PET). This characteristic is important in packaging because, generally, as polymer amorphousness increases, so does polymer permeability. Thus, to reduce the permeability of the polymer, it is desirable to decrease the amorphousness of the polymer(s) in the thin films.

Referring now to **Figure 3**, a cross-sectional view of a package wall **400** in accordance with an embodiment of the present invention is illustrated. The wall **400** includes a first flexible thin film **410** on the product side **405** of the wall **400**. The first flexible thin film **410** is comprised of a sealant layer 412 that comes into contact with food in the package and a first polymer layer **414.**

The sealant layer **412** of the package wall **400** functions to seal the open ends of the package. Typically, this sealant function is accomplished because of the temperature at which the package is finally formed. The sealant layer is formed of a composition that melts at a lower temperature than the substances forming the other layers of the package wall. The melting of the sealant layer **412** seals the package, while the remaining layers of the package wall are not melted. It is readily apparent that melting of the remaining layers of the package wall is not desirable because such melting would cause the package to stick to the machinery used to form the package, and would result in the formation of disfigured packages. The sealant layer is typically comprised of a ter-polymer blend, namely, polyethylene, polypropylene and polybutene. Other polymers and polymer blends may be used, however, as long as such blends allow for the sealant function.

In particular, the sealant layer **412** may possess a reduced permeability characteristic, which is achieved by enhancing the crystallinity or enhancing the orientation of the sealant layer **412**. Providing a sealant layer with a reduced permeability characteristic that is achieved by enhancing the crystallinity or the orientation of the sealant layer is the subject of a co-pending U.S. Patent Application also entitled "Pucker Resistant Film and Package," and filed on behalf of the present inventors simultaneously with the filing of the instant application. The entire disclosure of said co-pending U.S. Patent Application is hereby incorporated by reference as if fully set forth herein.

As set forth in the Applicants' co-pending application referenced above, to enhance the crystallinity or the orientation of the sealant layer **412**, one of either polyethylene or polybutene is removed from the ter-polymer blend known in the prior art. Thus, the sealant layer **412** is composed of a co-polymer blend. Preferably, the co-polymer blend forming the sealant layer **412** comprises polypropylene and polybutene. Alternatively, polypropylene and polyethylene form the co-polymer blend. By removing polyethylene or polybutene from the blend forming the sealant layer **412**, the crystallinity of the sealant layer **412** is enhanced over a sealant layer made of the ter-polymer blend as in the prior art. The crystallization can be enhanced during orientation because the number of constituents forming the polymer blend is decreased. Stated another way, the orientation of the sealant layer is enhanced because the number of constituents is decreased. The fewer constituents make it easier for the blend to crystallize or to orient.

Furthermore, when stretched, the polypropylene lengths of the ter-polymer blend have a tendency for the bonds therein to align in the same direction. That is to say, polypropylene is readily oriented when it is stretched. Polybutene and polyethylene also become oriented when stretched, but their tendency to do so is less than that of polypropylene. The lower tendencies of polyethylene and polybutene to orient decreases the overall orientation of the sealant layer **412**. Thus, removing polybutene or polyethylene from the ter-polymer blend enhances the orientation of the sealant layer **412.** Reducing the amount of polybutene or polyethylene used in the polymer blend forming the sealant layer is another method for enhancing the orientation of the sealant layer **412**.

Enhancing the crystallinity or orientation of the sealant layer reduces the permeability of the sealant layer to oils associated with the food product in the package. An additional benefit of enhancing the crystallinity or orientation of the sealant layer is that enhancing its crystallinity or orientation also reduces the amorphousness of the sealant layer which also reduces its permeability.

Still referring to **Figure 3**, other layers of the package wall are illustrated. In particular, the first flexible thin film **410** further comprises a first polymer layer **414**. The first polymer layer **414** preferably comprises oriented polypropylene (OPP), which has been oriented by the co-extrusion process discussed above. According to other embodiments, the first polymer layer **414** comprises PET, metalized PP or metalized PET, which was also formed by the co-extrusion process discussed above. Metalized polymer films are polymer films with a metal layer, such as aluminum, formed thereon. Methods for making metalized PP, metalized PET and other metalized polymer films are known. Any of these polymers however, will produce a film that has a region of amorphousness. The greater the amount of polymer amorphousness, the greater the amount of polymer permeability.

According to a preferred embodiment of the instant invention, one or more terpene resins are added to the polymer forming the first polymer layer **414.** Terpene resins are polymers of terpenes, which are present in essential oils or oil-containing resins of plants. The polymers are called polyterpenes, and are formed essentially of isoprene (2-methyl-1,3-butadiene) subunits. According to a preferred embodiment, polyterpenes are added to the first polymer layer **414** prior to the orientation of the layer. When the first polymer layer **414** is oriented, it is stretched. As the PP or PET backbone is stretched, the polyterpenes slide along the backbone and into the amorphous region of the PP or PET. Thus, the polyterpenes occupy the amorphous region of the first polymer layer **414**.

The presence of the polyterpenes in the amorphous region of the first polymer layer **414** provides the first polymer layer **414** with a reduced permeability characteristic because the polyterpenes in effect do not leave room for the oil. The absorption of oil into the amorphous region is reduced because the polyterpenes are occupying space that might otherwise be occupied by oils absorbed from the food in the package. Any number of terpene resins can be used to achieve the reduced permeability characteristic, including but not limited to, pinene, α-pinene, dipentene, limonene, myrcene, and camphene.

The package wall further comprises a second flexible thin film **420**. First flexible thin film **410** is laminated to second flexible thin film **420**. Lamination is a process well known in the art for bonding or tying films to each other. Common lamination processes include adhesive and extrusion lamination, and substrates or films commonly laminated together include metals, polymers, and paper. With extrusion lamination, a heated polymer resin is used to bond or tie films into a laminated sheet. This laminated sheet may subsequently be bonded to another film or substrate, and so on, to achieve a desired composite of laminates. With adhesion lamination, an adhesive is applied to one substrate, and a second substrate is then laminated to the adhesive so the substrates are bonded together by the adhesive. In food packaging applications, lamination is the process by which selected thin films are bonded together in an arrangement necessary to achieve the desired environment and shelf life for the food product inside the package.

Preferably, second flexible thin film **420** comprises one of oriented PP, PET, metalized PP and metalized PET. According to another embodiment of the instant invention, polyterpenes are added to the polymer forming the second flexible thin film **420**, as described above. According to this embodiment, the polyterpenes slide into the amorphous region of second flexible thin film **420** when the film is stretched, and thereby provide the film with a reduced permeability characteristic.

According to the embodiment illustrated in **Figure 3**, a third thin film **430** is laminated to the second film **420** on the outside **440** of the package wall **400**. The third film **430** is comprised of a first third film layer **432** and a second third film layer **434**. The first third film layer **432** comprises a print layer, an ink layer, or a decorative layer. Preferably, the second third film layer **434** comprises PP or PET, and is preferably transparent to allow the first third film layer **432** underneath to be seen. According to yet another embodiment of the package wall **400** of Figure 3, the third film layer **430** is not used. This embodiment is not illustrated, but one of ordinary skill in the art would readily appreciate that when a third film layer **430** is not used, the second film layer **420** is on the outside **440** of the package wall **400.**

According to other embodiments, other films are laminated to the third layer **430** on the outside **440** of the package wall **400.** Thus, depending on the particular packaging application and desired barrier properties, any of a number of thin film configurations can employ the reduced permeability sealant layer of the present invention.

For example, one such embodiment is illustrated in **Figure 4**. According to the embodiment illustrated in **Figure 4**, the package wall **100** is comprised of three multi-layer, laminated, flexible thin films. The first multi-layer film **120** is on the product side **110** of the package wall **100**. The first film **120** is comprised of a sealant layer **122** that comes into contact with food in the package. The sealant layer **122** may possess a reduced permeability characteristic as described with reference to the sealant layer **412** in **Figure 3**.

Referring still to **Figure 4**, the first film **120** further comprises a first first film layer **124** and a second first film layer **126.** First first film layer preferably comprises one of oriented polypropylene (PP) or polyethylene terephthalate (PET). According to a preferred embodiment, one or more polyterpenes are added to the polymer forming the first first film layer **124**. According to a preferred embodiment, polyterpenes are added to the first first film layer **124** prior to the orientation of the layer. When the first first film layer **124** is oriented, it is stretched. As the PP or PET backbone is stretched, the polyterpenes slide along the backbone and into the amorphous region of the PP or PET. Thus, the polyterpenes occupy the amorphous region of the first first film layer **124**.

The presence of the polyterpenes in the amorphous region of the first first film layer **124** provides the layer with a reduced permeability characteristic because the polyterpenes in effect do not leave room for oil. The absorption of oil into the amorphous region is reduced because the polyterpenes are occupying space that might otherwise be occupied by oils absorbed from the food in the package. Any number of terpene resins can be used to achieve the reduced permeability characteristic, including but not limited to, pinene, α-pinene, dipentene, limonene, myrcene, and camphene.

The second first film layer **126** preferably comprises one of oriented PP, PET, metalized PP or metalized PET. According to another embodiment, polyterpenes are added to the polymer forming the second first film layer 126, as described above. According to this embodiment, the polyterpenes slide into the amorphous region of the second first film **126** when the film is stretched, and thereby provide the film with a reduced permeability characteristic.

A second multi-layer flexible thin film **130** is laminated to the first flexible thin film 120. This second thin film **130** comprises a first second film layer **132**, a second second film layer **134**, and a third second film layer **136**. According to one embodiment, the first second film layer **132** is polyethylene (PE), the second second film layer **134** is polypropylene (PP), and the third second film layer **136** is PE. The three layers are laminated so that the second second film layer **134** is sandwiched by lamination between the first **132** and third **136** layers. The bond between the second second film layer **134** and the first **132** and third **136** layers is such that it promotes separation of the three layers when the user opens the package. According to one embodiment, polyterpenes are added to the polypropylene forming second second film layer **134**. Such polyterpenes slide into the amorphous region of the polypropylene when the polypropylene is oriented, thereby reducing the permeability of the second second film layer **134**.

According to another embodiment, the second second film layer **134** comprises ethyl vinyl alcohol (EVOH). According to this embodiment, the first **132** and third **136** second film layers comprise PE, and the second second film layer **134** is sandwiched there between. A tying agent is used to bond the first 132 and third 136 layers on either side of the second second film layer **134**. The PE/PP/PE and PE/EVOH/PE embodiments of the second multi-layer flexible thin film **130** are used for different packaging applications and differ primarily in that the PE/EVOH/PE combination provides a superior barrier to oxygen, while the PE/PP/PE combination provides relatively little oxygen barrier.

Still referring to **Figure 4**, the package wall further comprises a third flexible thin film **140**, which comprises a first third film layer **142** and a second third film layer **144**. The first third film layer **142** comprises any substrate suitable for holding print, color, or other decorative or advertising matter desired to be visible on the outside **150** of the package. Preferably, the second third film layer **144** comprises PP or PET, which preferably is transparent so that the first third film layer **142** underneath is visible.

The reduced permeability of film layers with polyterpenes occupying the amorphous region of the film layers reduces the absorption and accumulation of product oils in such film layers that would lead to swelling of the package wall. Even if oils from the product side of the wall are absorbed by the film layers with polyterpenes occupying the amorphous regions, the rate of permeability is slower than that of film layers without occupying polyterpenes. Thus, whether absorption of product oils is reduced or slowed, the reduced permeability of the film layers prolongs the desired appearance of the package.

According to any of the embodiments of the invention discussed above, the reduced permeability characteristic comprises one or more of enhanced crystallinity and enhanced orientation of the polymers comprising the sealant layer, and/or decreased amorphousness in other package films by insertion of poly-terpenes into the films.

By incorporating a film layer with a decreased amorphousness into at least the first flexible thin film of a package wall, the present invention reduces the permeability of the package wall to oils and moisture associated with a packaged food product. The reduction in permeability reduces or slows absorption by the package wall of substances associated with the food product. The product oils whose absorption is reduced or slowed by the present invention could be any oils that accompany a food product and may be absorbed by the walls of the food package. Examples of such oils include but are not limited to corn, canola, sunflower, olive, or canola.

The flexible thin films assembled in the embodiments of **Figures 3 and 4** may be arranged any number of ways depending on the particular packaging application. Furthermore, the flexible thin films of the present invention are of the type commonly employed in the art to produce flexible packages using a typical form, fill, and seal packaging machine, and are typically constructed of thin film layers of up to about 150 gauge thickness (1.5 mils or 0.0015 inches). The desired product environment to be maintained within a package drives the types and arrangements of thin films that are chosen for a particular packaging application. Other considerations include desired shelf life and cost. A plurality of package designs is possible, depending on the preceding factors. The materials making up the film layers, primarily plastics, are well known in the art. Examples of such materials are various vinyl, metalized, and polymer extrusion films, and various adhesives, ties, and bonding agents for fixing the thin film layers together. These materials vary in cost, as well as in their physical characteristics, such as flexibility, strength, and permeability to substances that decrease the shelf life of a food product, such as oxygen, moisture, and light.

One advantage of the present invention is the reduction in absorption of food product oils and moisture accomplished by the film layer with a decreased amorphousness. This advantage is most evident when employed in packaging applications involving a longer shelf life and exposure to elevated temperatures.

Another advantage of the present invention is its ability to prolong the optimal appearance of a food package through at least the shelf life of the product. By reducing absorption of product oils by the package wall, the present invention prevents swelling which would otherwise result in an uneven, dimpled, puckered appearance in the package surface. This aesthetic improvement provides a significant marketing advantage in a competitive environment. In addition, the invention accomplishes its purpose with minimal additional material and manufacturing costs.

As used herein, the term "package" should be understood to include any food container made up of multi-layer thin films. The sealant layers, thin films, and films with a decreased amorphousness as discussed herein are particularly suitable for forming packages for snack foods such as potato chips, corn chips, tortilla chips and the like. However, the sealant layers, films, and films with decreased amorphousness disclosed herein can be used to form packages for other foods. Moreover, while the layers and films discussed herein are contemplated for use in processes for the packaging of snack foods, such as the filling and sealing of bags of snack foods, the layers and films can also be put to use in processes for the packaging of other foods. While the invention has been particularly shown and described with reference to a preferred embodiment, it will be understood by those skilled in the art that various changes in form and detail may be made therein without departing from the spirit and scope of the invention.

## Claims

1. A food package comprising:
at least one oriented thin film, said thin film comprising a polymer selected from the group of oriented polypropylene, polyethylene teraphthalate, metalized polypropylene, and metalized polyethylene teraphthalate, wherein prior to orientation of said film, at least one polyterpene is added to said polymer.

2. The food package of Claim 1, wherein said at least one polyterpene is selected from the group of pinene, α-pinene, dipentene, limonene, myrcene, and camphene.

3. The food package of Claim 1 wherein said at least one oriented thin film is a first layer of thin film of a package having at least three film layers.

4. The food package of Claim 1 wherein said at least one oriented thin film is a second layer of thin film of a package having at least three film layers.

5. The food package of Claim 1 wherein said at least one oriented thin film is a third layer of thin film of a package having at least three film layers.

6. The food package of Claim 1 wherein said at least one oriented thin film is a fourth layer of thin film of a package having at least four film layers.

7. A method for making an oriented thin film, said method comprising the steps of
a) adding at least one polyterpene to a polymer; and
b) orienting said polymer into a thin film layer.

8. The method of Claim 7 wherein the at least one added polyterpene is selected from the group consisting of pinene, α-pinene, dipentene, limonene, myrcene, and camphene.

9. The method of Claim 7 wherein the polymer is selected from a group consisting of oriented polypropylene, polyethylene teraphthalate, metalized polypropylene, and metalized polyethylene teraphthalate.

10. The method of Claim 7 further comprising the steps of:
c) laminating said thin film layer to at least one additional thin film layer, thereby forming a thin film for use as a food package material.
